# FASCICULE DE BREVET EUROPEEN

(11) **EP 2 986 848 B1**
(45) Date de publication et mention de la délivrance du brevet: **04.07.2018**
(21) Numéro de dépôt: 14725000.5
(22) Date de dépôt: 17.04.2014
(51) Int. Cl.: F03D 13/20

(54) **STRUCTURE D'EOLIENNE FLOTTANTE**
SCHWIMMENDE WINDTURBINENSTRUKTUR
FLOATING WIND TURBINE STRUCTURE

(30) Priorité: 18.04.2013 FR 1300926
(43) Date de publication de la demande: 24.02.2016
(73) Titulaire: GUYOT, Marc, 44700 Orvault (FR)
(72) Inventeur: GUYOT, Marc, 44700 Orvault (FR)
(86) Numéro de dépôt international: PCT/EP2014/001037
(87) Numéro de publication internationale: WO 2014/170027

(56) Documents cités:
- WO-A1-01/73292
- DE-U1-202010 003 654
- KR-A- 20110 003 919

## Description

La présente invention concerne une structure pour éolienne flottante.

Plus particulièrement, l'invention se rapporte à un tel support flottant qui comporte des moyens en forme de bras de support, dont la partie supérieure est associée à la nacelle de l'éolienne et dont la partie inférieure est associée à des moyens en forme de flotteur et éventuellement à des moyens formant lest, la masse ajoutée et l'amortissement. Les documents KR 2011 0003919 et DE 20 2010 003654 divulguent des éoliennes flottantes. On connaît déjà dans l'état de la technique une grande variété de supports flottants de ce type utilisant un mat unique par nacelle d'éolienne.

Cependant on conçoit que de tels moyens en forme de mat de support unique concentrent les contraintes mécaniques en pied de mat et en tête de mat. Ces contraintes étant cycliques à cause des mouvements du flotteur et des variations du vent notamment, on conçoit que le dimensionnement de la structure, en fatigue mécanique notamment, en est affecté.

On conçoit également que de tels moyens en forme de mat unique sont très proches de la pale ou des pales du rotor lors de leur passage en position verticale avec l'extrémité de la pale pointant vers le sol. Lorsque la ou les pales passent à proximité du mat, on conçoit que la charge aérodynamique sur la ou les pales est brutalement modifiée à cause de perturbations aérodynamiques qui sont d'autant plus grandes que le diamètre du mat est grand et que la distance entre la ou les pales et le mat est petite. On comprend aisément que la variation de ladite charge aérodynamique génère des efforts cycliques, des contraintes mécaniques et une fatigue associée.

Le but de l'invention est donc de résoudre ces problèmes en proposant une structure d'éolienne plus légère, plus économique et permettant un meilleur rendement énergétique.

A cet effet, un premier aspect de l'invention a pour objet une structure pour éolienne flottante qui comporte des moyens en forme de plusieurs bras de support de la nacelle, dont la partie supérieure est associée à la nacelle et dont la partie inférieure est associée à des moyens en forme de flotteurs et éventuellement des moyens formant le lest, la masse ajoutée et l'amortissement. Comme connu par l'homme du métier, la nacelle est le moyen permettant d'une part de transformer le couple généré par la ou les pales du rotor actionnée(s) par le vent en débit énergétique de nature le plus souvent électrique ou hydraulique, et d'autre part de maintenir en position le rotor et sa ou ses pales. La structure comporte un bras de support de la nacelle au moins en amont de la nacelle par rapport à la direction du vent. La structure comporte un bras de support de la nacelle au moins en aval de la nacelle par rapport à la direction du vent. Ainsi, la structure permet à un rotor d'éolienne à axe horizontal ou presque horizontal composé d'une ou plusieurs pales de tourner librement autour de l'axe théorique du rotor. En d'autres termes, la structure permet de relier de manière rigide, par exemple de manière soudée et/ou boulonnée, les extrémités supérieures des bras amont et aval sans entraver la rotation du rotor et de sa ou ses pales. Cette liaison peut être réalisée, soit par l'intermédiaire d'au moins une pièce de connexion liée rigidement, soit en fixant directement les extrémités supérieures des bras les unes aux autres. Ainsi, il y a une continuité structurelle entre les bras à leur extrémité supérieure et il n'y a pas de mouvements relatifs entre les bras et ladite au moins une pièce de connexion quand elle est présente.

Ainsi, les fréquences naturelles de résonnance d'une telle structure sont sensiblement plus élevées que celle d'une structure d'éolienne flottante avec un mât fixe et unique, de sorte que les problèmes de vibrations rencontrées sur ces éoliennes sont considérablement réduits. En effet, les fréquences naturelles de résonnance de ces éoliennes avec des mâts en acier sont dans la plage de fréquence d'excitation due à la rotation des pales, ce qui impose d'augmenter par exemple le diamètre du mât pour décaler les fréquences propres de la structure et par conséquent d'augmenter le coût de la structure.

On comprend aisément que le rotor ne peut plus pivoter selon l'axe vertical entièrement comme le font les éoliennes connues de l'art antérieur. On comprend aisément que la distance minimale entre chacun des bras et la ou les pales lors de leur passage à proximité des bras est augmentée significativement par rapport à un mat unique vertical, et ce d'autant plus que l'inclinaison des bras de support par rapport à la verticale est grande. On comprend aisément que cette distance minimale entre une portion de pale et un bras de support est d'autant plus importante que l'on s'éloigne de l'axe de rotation du rotor, ce qui est favorable aux portions de pale les plus éloignées de l'axe de rotation du rotor qui sont la source majeure de captage de l'énergie du vent et donc la source majeure de production d'énergie. L'inclinaison des bras permet donc d'améliorer le rendement énergétique de l'éolienne. Avantageusement, l'inclinaison des bras par rapport à la verticale est comprise en 5 et 55 degrés, voir encore plus avantageusement entre 10 et 45 degrés.

Selon un autre mode de réalisation, l'axe du rotor portant la ou les pales est un axe creux, ce afin que la nacelle et la partie supérieure des bras de support puissent être reliées ensemble dans ledit axe creux. Le diamètre intérieur dudit axe creux pourra éventuellement être relativement grand par rapport au diamètre extérieur du rotor et de la ou des pales, c'est-à-dire le diamètre décrit par l'extrémité de la plus grande pale. Le rapport entre ces deux diamètres pourra être compris entre deux et cinquante pour cent. Ainsi, la longueur libre de la ou des pales sera réduite pour un même diamètre externe du rotor portant la ou les pales, sans réduction significative du couple aérodynamique puisque les portions de pales proches du centre du rotor ne génèrent pas ou très peu de couple. Comme connu par l'homme du métier, la majeure partie du couple produit par le rotor et sa ou ses pales provient de la moitié de pale la plus éloignée de l'axe de rotation du rotor. Ainsi, la réduction de la longueur de la ou des pales pour un même diamètre total extérieur de l'ensemble rotor-pale(s) engendre une longueur libre des pales plus faibles et donc des contraintes mécaniques en pied de pale plus faibles, ce qui réduit le coût des pales.

D'autre part, en accroissant le diamètre de l'axe creux, l'espace disponible pour relier les bras à leur extrémité supérieure est agrandi, ce qui a pour effet de pouvoir répartir et diffuser les efforts mécaniques notamment conséquents à la poussée du vent sur les pales dans l'axe du vent. Les contraintes mécaniques dans la structure s'en trouvent ainsi diminuées. Ainsi, la structure est plus facile à mettre en oeuvre.

Selon un autre mode de réalisation, les bras de support sont éventuellement carénés ou profilés de manière à réduire les perturbations aérodynamiques sur les pales du rotor et à limiter le fardage. Le profil pourra avoir une forme de profil NACA. De préférence, le coefficient de traînée (Cd) sera inférieur à 0,5, voire inférieur à 0,2. Ce type de profil est inadapté à une éolienne connue de l'art antérieur, car la nacelle s'oriente alors face au vent sans que le mat fixe ne puisse pivoter. Avec une telle éolienne de l'art antérieur, un mat de section profilé ne serait avantageux en termes de traînée aérodynamique que pour une direction unique de vent. Dès que le vent ne serait plus aligné avec la corde de la section profilée du mât, les perturbations aérodynamiques seraient plus importantes qu'avec une section circulaire. C'est pour cette raison que les mats des éoliennes de l'art antérieur sont majoritairement circulaire pour que le rendement soit le même quelle que soit la direction du vent.

Selon un autre mode de réalisation, les bras de support de la nacelle peuvent éventuellement être reliés entre eux par des bras de maintien éventuellement horizontaux placés dans la partie inférieure de la structure porteuse. Ainsi les bras de support de la nacelle sont reliés entre eux de manière rigide, d'une part dans leur partie supérieure au niveau de la nacelle, et d'autre part dans leur partie inférieure au-dessus et/ou au-dessous de la surface de l'eau par des bras de maintien. Un tel dispositif permet de rendre la structure plus rigide.

Selon un autre mode de réalisation, l'orientation de l'éolienne par rapport à l'axe du vent est réalisée par un ou plusieurs moyens. Le premier moyen consiste en une auto-orientation de l'éolienne par rapport à son ou ses points d'amarrages. Pour cela, le ou les points amarrage des lignes d'ancrages sont placés en amont de la position du centre de poussée vélique par rapport au vent. Il est entendu qu'une ligne d'ancrage est le moyen de relier l'éolienne flottante au fond de la mer ou du lac et que le centre de poussée vélique est le barycentre des efforts horizontaux exercés par le vent sur la ou les pales et les parties émergées de l'éolienne flottante soumises à l'action du vent. Ainsi, l'éolienne s'auto-oriente face au vent de la même manière qu'un navire au mouillage. Le second moyen est réalisé grâce une nacelle orientable qui pivote au sommet des bras de support de la nacelle selon un axe vertical et/ou un axe horizontal perpendiculaire à l'axe de rotation des pales. Bien que limité par la présence des bras de support, le mouvement de rotation de la nacelle selon l'axe vertical permet d'ajuster l'orientation de l'éolienne pour par exemple dévier le sillage aérodynamique ou contrecarrer l'effet d'une houle dont l'orientation serait différente de l'orientation du vent. Ceci permet de garantir le rendement aérodynamique de l'éolienne quelle que soit l'orientation du vent et de la houle. Comme connu par l'homme du métier, le sillage d'une éolienne est caractérisé par une zone aval au vent par rapport à l'éolienne dans laquelle la vitesse moyenne de l'écoulement est plus faible qu'en amont de l'éolienne et la turbulence plus élevée qu'en amont de l'éolienne. Ledit moyen de rotation de la nacelle permettant de dévier le sillage permet donc de déplacer la zone de sillage afin que ladite zone de sillage ne perturbe pas le rendement aérodynamique des éoliennes flottantes ou fixes disposées en aval. Comme connu par l'homme du métier, les éoliennes sont parfois regroupées au sein d'un parc éolien, également appelé ferme éolienne. L'invention peut éventuellement utiliser une nacelle pendulaire, caractérisée par le fait que la nacelle de l'éolienne est reliée à la structure porteuse par une liaison pivot d'axe horizontal et perpendiculaire à l'axe du rotor. Ceci permet d'ajuster l'orientation du rotor et de sa ou ses pales afin que ledit rotor muni de ses pales soit normal au vecteur vent quelle que soit l'inclinaison de l'éolienne flottante soumise à la poussée du vent et aux efforts dus la houle. Ceci permet également de dévier le sillage de l'éolienne afin de ne pas perturber le fonctionnement des éoliennes éventuellement disposées en aval. L'invention peut éventuellement utiliser un rotor conique ou à conicité variable, c'est-à-dire dont les pales du rotor sont orientées ou orientables par rapport à l'axe de rotation du rotor de sorte que les pales balayent une surface conique plutôt qu'un disque. La structure d'éolienne revendiquée est plus adaptée à ce type de rotor conique que les structures classiques qui sont limitées par la distance entre la nacelle et le mat.

Selon un autre mode de réalisation, la structure d'éolienne comprend un ou des points d'amarrages de une ou des lignes d'ancrages situés sur la partie externe d'un touret composé de deux pièces concentriques au moins, les deux pièces formant cinématiquement au moins un pivot d'axe de rotation vertical, la pièce interne du touret étant solidaire de la structure flottante de l'éolienne et étant évidée en son centre le long de l'axe vertical de rotation entre lesdites deux pièces.
La structure d'éolienne comprend un ombilic, élément comprenant les câbles électriques de transmission de puissance et les câbles de transmission de données et de commande, qui passe par la partie évidée du touret solidaire de la structure de l'éolienne. Ainsi, l'ombilic n'est pas en contact avec les lignes ancrages quelle que soit l'orientation de l'éolienne par rapport au fond de la mer.
En d'autres termes, la structure d'éolienne flottante est agencée pour être amarrée par l'intermédiaire d'au moins un point d'amarrage et comprend :
- un touret évidé traversant agencé pour former au moins un pivot d'axe de rotation vertical de sorte à permettre le pivotement de ladite structure d'éolienne par rapport audits points d'amarrage,
- un ombilic
caractérisée en ce que l'ombilic passe dans l'évidement dudit touret.

Un dernier aspect de l'invention consiste en une éolienne flottante comportant :
- un support flottant,
- un rotor muni d'au moins une pale agencée pour tourner sous l'effet du vent dans un plan sensiblement normal à l'axe du vent, ledit plan définissant une zone éolienne au vent et une zone éolienne sous le vent,
- une nacelle agencée pour transformer la rotation du vent en débit énergétique,
- un portique agencé pour supporter le rotor, le dit portique comportant au moins un premier bras et au moins un deuxième bras, fixes par rapport au flotteur et reliés l'un à l'autre de manière rigide,
caractérisée en ce que ledit au moins un premier bras se trouve dans la zone éolienne au vent et ledit au moins deuxième bras se trouve dans la zone éolienne sous le vent de sorte à assurer une continuité structurelle entre les zones éoliennes au vent et sous le vent.

Les principaux avantages de cette invention sont :
- l'augmentation de la distance pale-bras et donc la réduction des efforts cycliques et de la fatigue mécanique sur la ou les pales.
- la réduction des perturbations aérodynamiques générées par l'habituel mat de support de la nacelle et par conséquent la réduction des efforts cycliques et de la fatigue mécanique sur la ou les pales, ladite réduction étant due d'une part aux diamètres faibles des bras de support par rapport au diamètre plus grand d'un mat unique et d'autre part à la forme aérodynamique des bras de support, forme rendue possible par le fait que l'ensemble de la structure de l'éolienne s'oriente face au vent, ce qui n'est pas le cas d'une éolienne dont seule la nacelle s'oriente face au vent, le mat fixe devant être conçu pour toutes les orientations possibles du vent.
- la réduction des concentrations de contraintes dans la structure de l'éolienne flottante, rendue possible d'une part par la multiplication des bras de supports de la nacelle et leur positionnement et d'autre part par le grand espace disponible à l'intérieur de l'axe creux du rotor qui peut être utilisé pour répartir et diffuser les efforts à la jonction supérieure des bras de supports et de la nacelle, ainsi que par la liaison rigide des bras entre eux.

- l'augmentation des fréquences propres de la structure par rapport aux structures connues de l'art antérieur, ce qui permet de ne pas surdimensionner la structure pour décaler lesdites fréquences propres et ainsi garantir que la structure n'entre en résonnance avec l'excitation due au rotor.
- la réduction de la longueur de la ou des pales pour un même diamètre total extérieur de l'ensemble rotor-pale(s), ce qui se traduit par une longueur libre des pales plus faibles et donc des contraintes mécaniques en pied de pale plus faibles.

L'invention sera mieux comprise avec les exemples qui vont suivre et donnés uniquement à titre d'exemples. Les dessins annexés illustrent l'invention.
La figure 1 représente de manière schématique en trois dimensions le dispositif selon l'invention.
La figure 2 représente de manière schématique une vue de profil du dispositif selon l'invention.
La figure 3 représente de manière schématique en trois dimensions le dispositif selon l'invention.

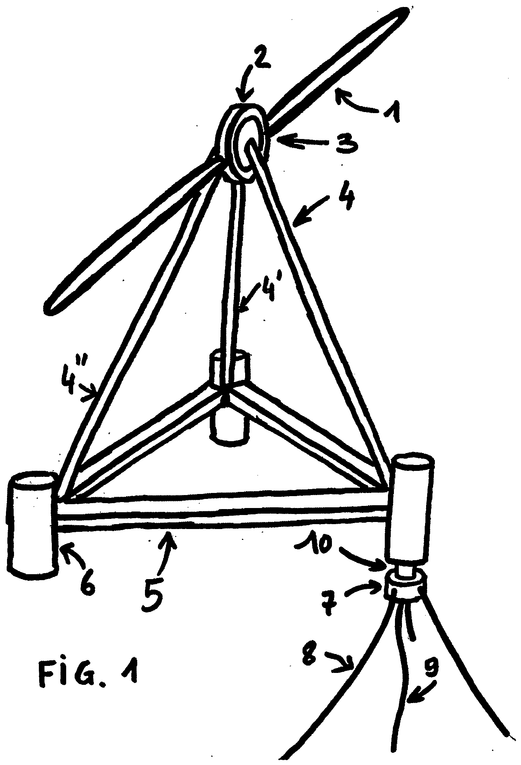

Comme indiqué sur la figure 1, les deux pales, référence générale (1) pour l'une d'elle sur la figure, sont reliées au rotor, référence (2) sur la figure. Ledit rotor, contenant notamment le rotor de la génératrice électrique et les composants nécessaires aux réglages des pales, est en liaison pivot avec la nacelle, référence (3) sur la figure. L'ensemble composé des pales, référence (1) pour l'une d'elle sur la figure, et du rotor, référence (2) sur la figure, est également appelé hélice. La génératrice électrique peut être remplacée par un système de pompes hydrauliques, un dispositif de production calorifique ou tout autre système permettant un débit énergétique. Pour des raisons de lisibilité, le bras de support de nacelle amont au vent, référence (4) sur la figure, est directement relié à la nacelle pleine en son centre, référence (3) sur la figure. Dans la pratique, ladite nacelle, éventuellement évidée en son centre, est par exemple reliée aux trois bras (4), (4') et (4"), référence (4) pour le bras de support de nacelle amont au vent sur la figure, par des treillis tubulaires métalliques non représentés sur la figure. L'ensemble composé des bras (4), (4') et (4"), et du treillis métallique les reliant est également appelé portique. Pour réaliser le montage de la structure, la nacelle et les pales sont d'abord assemblées au sol, puis l'ensemble est hissé au niveau de la partie supérieure des bras de support de la nacelle afin de pouvoir fixer la nacelle aux bras de support. On comprend aisément que les pales, lors de leur rotation autour de l'axe horizontal parallèle au vent, passent dans l'espace géométrique tétraédrique délimité par les trois bras. Lesdits bras de support de nacelle sont reliés dans l'exemple à des bras de maintien horizontaux et aplatis, un des bras de maintien étant référencé (5) sur la figure. L'ensemble des bras est relié à trois flotteurs cylindriques verticaux, un des flotteurs étant référencé (6) sur la figure. La pièce externe du touret, référence (7) sur la figure, est en liaison pivot avec la structure de l'éolienne. Sur ladite pièce externe sont amarrés dans l'exemple trois lignes d'ancrages de type caténaire, l'une d'entre elle étant référencée (8) sur la figure. L'ombilic, référence (9) sur la figure, passe le long de l'axe vertical de rotation de la pièce externe du touret, référence (7) sur la figure. La pièce interne du touret, référence (10) sur la figure, est solidaire de la structure de l'éolienne et est évidée en son centre selon l'axe vertical afin de laisser un espace pour le passage de l'ombilic.

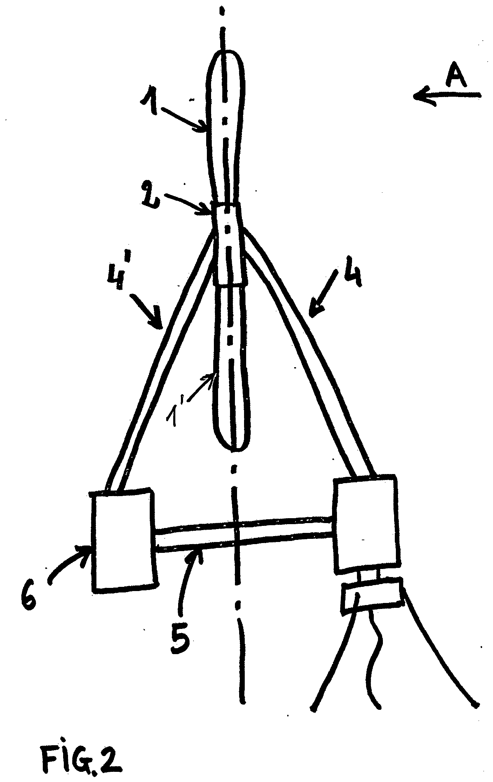

Comme indiqué sur la figure 2, la lettre A désigne la direction de l'axe du vent. L'hélice, composée d'au moins une pale, références (1) et (1') sur la figure, et du rotor, référence (2) sur la figure, balaye lors de sa rotation une surface approximativement plane, éventuellement conique. Cette surface sépare l'espace en deux zones. Une première zone éolienne au vent, également appelée zone amont au vent, dans laquelle se trouve le bras, référence (4) sur la figure. Une seconde zone éolienne sous le vent, également appelée zone aval au vent, dans laquelle se trouve le bras, référence (4') sur la figure. Ledit plan est généralement normal à plus ou moins 20° au vecteur vent, décrit par une norme, un axe et une direction (A). Ledit plan est donc sensiblement normal à l'axe du vent. Le dispositif composé de la nacelle et de l'hélice peut disposer de moyens d'ajustement de l'orientation tel que connu par l'homme du métier avec des moyens tels que vérins ou ensemble de couronne dentée et pignon. Les bras, références (4) et (4') sur la figure, sont reliés de manière rigide par leur extrémité supérieure. Il existe ainsi une continuité structurelle dans l'ensemble de la structure composée par les flotteurs, référence (6) sur la figure, les pontons, référence (5) sur la figure, et les bras, références (4) et (4') sur la figure, qui permet de rigidifier la structure.

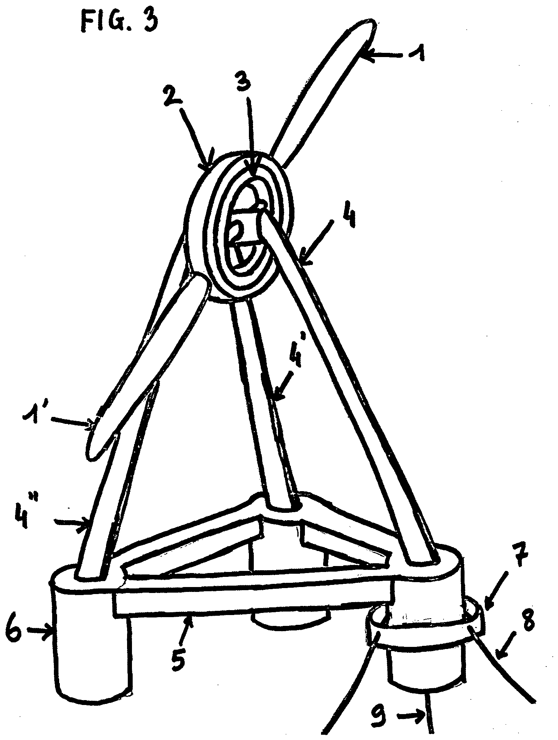

Comme indiqué sur la figure 3, les pales, références (1) et (1') sur la figure, entraînent le rotor, référence (2) sur la figure. Le rotor est relié à la nacelle, référence (3) sur la figure, par au moins un roulement, de préférence un jeu de roulements, afin d'assurer le guidage cinématique en liaison pivot du rotor par rapport à la nacelle. La partie dudit rotor ayant une fonction de rotor électrique de génératrice pourra éventuellement être guidée à l'aide de et un ou deux roulements qui ne reprendront aucun effort de poussée vélique mais assureront une grande précision et un faible jeu entre les parties rotoriques et statoriques de la génératrice. Ladite génératrice est dans cet exemple utilisée en prise directe sans dispositif de démultiplication. Le rotor de la dite génératrice utilise des aimants permanents ou un rotor bobiné et est placé autour du stator de la génératrice et non pas à l'intérieur. Il s'agit donc d'un rotor de génératrice externe. La nacelle, référence (3) sur la figure, est reliée aux bras de support (4), (4') et (4") par l'intermédiaire ici d'un pivot. La figure 3 permet de bien visualiser la continuité structurelle entre le bras de support amont, référence (4) sur la figure, et les bras de support aval, référence (4') et (4"). Cette continuité structurelle permet d'avoir une structure flottante plus rigide et plus légère. La structure flottante coûte ainsi moins chère à produire grâce à une moindre quantité de matériau. Par ailleurs, les fréquences naturelles de résonnance d'une telle structure sont sensiblement plus élevées que celle d'une structure pour éolienne flottante avec un mât fixe et unique. Ainsi, les problèmes de vibrations rencontrées sur les éoliennes connues de l'art antérieur sont considérablement réduits. En effet, comme connu par l'homme du métier, les fréquences naturelles de résonnance des éoliennes connues de l'art antérieur avec des mâts en acier sont dans la plage de fréquence d'excitation due à la rotation des pales, ce qui impose d'augmenter par exemple le diamètre du mât pour décaler les fréquences propres de la structure et par conséquent d'augmenter le coût.

Comme indiqué sur la figure 3, le rotor, référence (2) sur la figure, et ses pales, références (1) et (1') sur la figure, n'est pas disposé en porte-à-faux de la nacelle. Par conséquent, contrairement aux éoliennes connues de l'art antérieur, la nacelle, référence (3) sur la figure, ne subit pas de fort moment de flexion conséquent à la masse dudit rotor et desdites pales. Ces efforts plus faibles permettent de réduire le dimensionnement de la structure et donc le coût.

Comme indiqué sur la figure 3, la nacelle, référence (3) sur la figure peut pivoter par rapport à la structure flottante afin d'ajuster l'orientation de la surface balayée par les pales, références (1) et (1') sur la figure. Lorsque la structure flottante tangue sous l'action de la mer ou du vent, ladite surface balayée peut par exemple être orientée parfaitement face au vent par exemple grâce à un système de vérins.

Comme indiqué sur la figure 3, le rapport entre le diamètre de l'axe creux du rotor, référence (2) sur la figure, et le diamètre de la surface circulaire balayée par les pales, références (1) et (1') sur la figure, est de l'ordre de 20%. Ainsi, la génératrice électrique, par exemple une génératrice synchrone à rotor bobiné ou à aimants permanents en prise directe avec ledit rotor, a un diamètre beaucoup plus élevé que les génératrices utilisées par les éoliennes connues de l'art antérieur. Comme connu par l'homme du métier, ce diamètre plus élevé permet de réduire la masse de matière active nécessaire à l'obtention d'un niveau de spécifications données, comme par exemple un niveau de couple nominal de la génératrice. Le coût de ladite génératrice s'en trouve ainsi réduit. Par ailleurs, l'espace disponible à l'intérieur de la nacelle permet de reprendre sur de grandes surfaces les efforts dus au couple de la génératrice, à la poussée vélique, à la gravité et à l'inertie. Par souci de lisibilité, la partie supérieure du bras de support amont au vent, référence (4) sur la figure, n'exploite pas tout l'espace disponible. Comme connu par l'homme du métier, on comprend que les contraintes mécaniques locales sont plus faibles lorsque les efforts sont répartis. La résistance de la structure à la fatigue s'en trouve ainsi améliorée, ce qui permet de réduire la masse et le coût de la structure. De la même façon, le moment de flexion en pied desdites pales est réduit par rapport aux éoliennes connues de l'art intérieur puisque la longueur libre desdites pales est réduite grâce audit rotor de grand diamètre. La résistance desdites pales à la fatigue s'en trouve ainsi améliorée, ce qui permet de réduire la masse et coût desdites pales.

Comme indiqué sur la figure 3, les bras de supports, références (4),(4') et (4") sur la figure 3, sont inclinés et dotés de sections profilés et non-circulaires permettant une réduction des perturbations aérodynamiques, ce qui est favorable à un meilleur fonctionnement aérodynamique des pales. Comme connu par l'homme de métier, le mat des éoliennes connus de l'art antérieur est systématiquement vertical et l'axe du rotor supportant les pales est incliné de quelques degrés, par exemple 6°, afin justement de ménager une distance suffisante entre ledit mat et les pales lors de leur passage devant ledit mat. On comprend aisément que la distance entre les pales, références (1) et (1') sur la figure 3 et lesdits bras de support est croissante lorsqu'on s'éloigne du rotor, ce qui est favorable à un meilleur fonctionnement aérodynamique des pales.

Comme indiqué sur la figure 3, la pièce externe du touret, référence (7) sur la figure, est en liaison rotule avec la structure de l'éolienne.

Le dispositif est particulièrement adapté pour les structures d'éoliennes flottantes à axe horizontal quelle que soit le type de flotteur. Ce dispositif est particulièrement adapté pour des flotteurs de type barge flottante, SPAR, semi-submersible, ou plate-forme flottante dotée d'une piscine amortissante.

## Revendications

1. Structure d'éolienne flottante comportant
- un rotor (2) muni d'au moins une pale (1),
- au moins deux bras de support (4)(4') d'une nacelle (3), lesdits au moins deux bras de support comprenant des parties supérieures et inférieures, lesdites parties supérieures sont associées à la nacelle (3) et lesdites parties inférieures sont associées à des moyens en forme de flotteurs (6),
- au moins un bras de support (4) situé en amont du rotor (2) par rapport à la direction du vent,
- au moins un bras de support (4') situé en aval du rotor (2) par rapport à la direction du vent,
**caractérisée en ce que** le rotor (2) est muni d'un axe creux agencé pour tourner autour de la nacelle (3).

2. Structure d'éolienne flottante selon la revendication 1 **caractérisée en ce que** lesdites parties supérieures des bras de support (4)(4') sont reliées entre elles.

3. Structure d'éolienne flottante selon l'une des revendications précédentes comportant au moins un point d'amarrage **caractérisée en ce que** ledit au moins un point d'amarrage est situé en amont du centre de poussée vélique par rapport à la direction du vent.

4. Structure d'éolienne flottante selon l'une des revendications précédentes **caractérisée en ce que** au moins un bras de support (4) est caréné ou profilé de sorte à limiter les perturbations aérodynamiques sur la ou les pales (1) de l'éolienne.

5. Structure d'éolienne flottante selon l'une des revendications précédentes dont l'axe creux du rotor (2) présente un alésage de révolution, **caractérisée en ce que** le rapport entre le diamètre de l'alésage et le diamètre extérieur maximum défini par l'extrémité de ladite au moins une pale (1) lors de la rotation du rotor autour de la nacelle (3) est compris entre deux et cinquante pour cent.

6. Structure d'éolienne flottante selon l'une des revendications précédentes agencé pour être ammarée par l'intermédiaire d'au moins un point d'ancrage et comprenant :
- un touret évidé traversant agencé pour former au moins un pivot d'axe de rotation vertical de sorte à permettre le pivotement de ladite structure d'éolienne par rapport auxdits points d'amarrage,
- un ombilic (9)
**caractérisé en ce que** l'ombilic passe dans l'évidement dudit touret.

## Patentansprüche

1. Schwimmende Windkraftanlagenstruktur, aufweisend
- einen Rotor (2), der mit mindestens einem Rotorblatt (1) versehen ist,
- mindestens zwei Trägerarme (4) (4') für eine Gondel (3), wobei die mindestens zwei Trägerarme obere und untere Teile umfassen, wobei die oberen Teile der Gondel (3) zugeordnet sind und die unteren Teile Mitteln in Form von Schwimmern (6) zugeordnet sind,
- mindestens einen Trägerarm (4), der relativ zu der Windrichtung stromaufwärts des Rotors (2) befindlich ist,
- mindestens einen Trägerarm (4'), der relativ zu der Windrichtung stromabwärts des Rotors (2) befindlich ist,
**dadurch gekennzeichnet, dass** der Rotor (2) mit einer Hohlwelle versehen ist, die so eingerichtet ist, dass sie sich um die Gondel (3) dreht.

2. Schwimmende Windkraftanlagenstruktur nach Anspruch 1, **dadurch gekennzeichnet, dass** die oberen Teile der Trägerarme (4) (4') miteinander verbunden sind.

3. Schwimmende Windkraftanlagenstruktur nach einem der vorhergehenden Ansprüche, aufweisend mindestens einen Verankerungspunkt, **dadurch gekennzeichnet, dass** der mindestens eine Verankerungspunkt relativ zu der Windrichtung stromaufwärts des Winddruckzentrums befindlich ist.

4. Schwimmende Windkraftanlagenstruktur nach einem der vorhergehenden Ansprüche, **dadurch gekennzeichnet, dass** mindestens ein Trägerarm (4) stromlinienförmig ist oder mit einem derartigen Profil versehen ist, dass er aerodynamische Störungen auf das Rotorblatt oder die Rotorblätter (1) der Windkraftanlage begrenzt.

5. Schwimmende Windkraftanlagenstruktur nach einem der vorhergehenden Ansprüche, wobei die Hohlwelle des Rotors (2) eine Rotationsbohrung aufweist, **dadurch gekennzeichnet, dass** das Verhältnis zwischen dem Durchmesser der Bohrung und dem maximalen Außendurchmesser, der durch das Ende des mindestens einen Rotorsblattes (1) definiert ist, bei der Drehung des Rotors um die Gondel (3) zwischen zwei und fünfzig Prozent beträgt.

6. Schwimmende Windkraftanlagenstruktur nach einem der vorhergehenden Ansprüche, eingerichtet für die Verankerung über mindestens einen Verankerungspunkt und umfassend
- eine mit einer Ausnehmung versehene, durchgehende Haspel, die eingerichtet ist, um mindestens einen Zapfen mit einer vertikalen Rotationsachse zu bilden, derart, dass sie das Schwenken der Windkraftanlagenstruktur relativ zu den Verankerungspunkten gestattet,
- einen Nabel (9),
**dadurch gekennzeichnet, dass** der Nabel in die Ausnehmung der Haspel eintritt.

## Claims

1. Floating wind turbine structure comprising
- a rotor (2) bearing at least one blade (1),
- at least two support arms (4) (4') of a nacelle (3), said at least two support arms comprising upper and lower parts, said upper parts are associated with the nacelle (3) and said lower parts are associated with means in the form of floats (6),
- at least one support arm (4) located upstream of the rotor (2) relative to the wind direction,
- at least one support arm (4') located downstream of the rotor (2) relative to the wind direction,
**characterised in that** the rotor (2) is provided with a hollow spindle arranged to rotate around the nacelle (3).

2. Floating wind turbine structure as claimed in claim 1, **characterised in that** said upper parts of the support arms (4) (4') are connected together.

3. Floating wind turbine structure as claimed in any one of the preceding claims, comprising at least one mooring point, **characterised in that** said at least one mooring point is located upstream of the centre of sail force relative to the wind direction.

4. Floating wind turbine structure as claimed in any one of the preceding claims, **characterised in that** at least one support arm (4) is streamlined or profiled so as to limit the aerodynamic disturbances on the blade(s) (1) of the wind turbine.

5. Floating wind turbine structure as claimed in any one of the preceding claims, the hollow spindle of the rotor (2) having a bore of revolution, **characterised in that** the ratio between the diameter of the bore and the maximum outer diameter defined by the end of said at least one blade (1) upon rotation of the rotor about the nacelle (3) is between two and fifty percent.

6. Floating wind turbine structure as claimed in any one of the preceding claims arranged to be moored via at least one mooring point and comprising:
- a through-going recessed reel arranged to form at least one pivot with a vertical rotational axis so as to allow the pivoting of said wind turbine structure relative to said mooring points,
- an umbilical (9),
**characterised in that** the umbilical passes into the recess of said reel.
